# EUROPEAN PATENT APPLICATION

(11) **EP 1 655 505 A2**
(43) Date of publication of application: **10.05.2006**
(21) Application number: 05023982.1
(22) Date of filing: 03.11.2005
(51) Int. Cl.: F16D 55/228

(54) **Opposed piston caliper for use in a vehicle disc brake assembly and method for producing same**

(30) Priority: 04.11.2004 US 624999 P
(71) Applicant: KELSEY-HAYES COMPANY, Livonia, MI 48150 (US)
(72) Inventor: Morais, Eduardo, South Lyon Michigan 48178 (US); Miller, Harry, Canton Michigan 48188 (US); Marconcin, Mauro, South Lyon Michigan 48178 (US)
(74) Representative: Beyer, Andreas

(57) **Abstract**

An opposed piston disc brake caliper adapted for use with a disc brake assembly includes a caliper of a one piece construction including an inboard leg and an outboard leg connected together by a bridge portion. The inboard leg has at least one piston bore formed therein, the outboard leg has at least one piston bore formed therein, the inboard leg has at least one generally axially extending opening formed therein which is coaxially aligned with the outboard leg piston bore, and the outboard leg has at least one generally axially extending opening formed therein which is coaxially aligned with the inboard leg piston bore.

## Description

### CROSS REFERENCE TO RELATED APPLICATIONS

This application claims the benefit of U.S. Provisional Application No. 60/624,999, filed November 4, 2004.

### BACKGROUND OF THE INVENTION

This invention relates in general to vehicle disc brake assemblies and in particular to an improved structure for an opposed piston caliper adapted for use in such a vehicle disc brake assembly and method for producing the same.

Most vehicles are equipped with a brake system for retarding or stopping movement of the vehicle in a controlled manner. A typical brake system for an automobile and light duty truck includes a disc brake assembly for the front wheels of the vehicle, and either a disc brake assembly or a drum brake assembly for the rear wheels of the vehicle. A typical brake system for a medium duty truck includes a disc brake assembly on all four wheels of the vehicle. The brake assemblies are typically actuated by hydraulic or pneumatic pressure generated when an operator of the vehicle depresses a brake pedal. The structures of the disc brake assembly, as well as the actuators therefor, are well known in the art.

There are two basic types of calipers for use in disc brake assemblies, namely, a "sliding" or "floating" caliper disc brake assembly, and a "fixed" caliper disc brake assembly. A sliding caliper type of disc brake assembly is usually used on automobiles and light and medium duty trucks. A conventional floating caliper type of disc brake assembly includes a brake caliper which is supported by a pair of pins for sliding movement relative to an anchor plate which is secured to a fixed, non-rotatable component of the vehicle. A fixed caliper type of disc brake assembly is sometimes used on automobiles and light and medium duty trucks. A conventional fixed caliper type of disc brake assembly includes a brake caliper which is solidly fixed to a fixed, non-rotatable component of the vehicle.

In both types of disc brake assemblies, a pair of brake shoes are supported by the disc brake assembly for sliding movement relative thereto. The brake shoes have respective friction pads which are disposed on opposite sides of a rotor. The rotor, in turn, is connected to the wheel of the vehicle for rotation therewith. To effect braking action, the brake shoes are moved inwardly toward one another so as to frictionally engage the opposed sides of the rotor. Such frictional engagement causes retarding or stopping of the rotational movement of the rotor and, therefore, the wheel of the vehicle in a controlled manner.

To accomplish this in a fixed caliper type of disc brake assembly, the brake caliper assembly includes an inboard caliper assembly or half disposed adjacent an inboard brake shoe, and an outboard caliper assembly or half disposed adjacent an outboard brake shoe. One or more hydraulically or pneumatically actuated pistons are provided in respective cylindrical recesses formed in the inboard caliper assembly adjacent the inboard brake shoe, and one or more hydraulically or pneumatically actuated pistons are provided in respective cylindrical recesses formed in the outboard caliper assembly adjacent the outboard brake shoe. This type of construction is commonly referred to as an "opposed" piston caliper design. When the brake pedal is depressed, the pistons urge the brake shoes toward one another and into engagement with the associated side of the rotor. As result, the brake shoes frictionally engage the opposed sides of the rotor.

A typical opposed piston fixed caliper formed from iron is of a two-piece construction and includes an inboard brake caliper assembly or half and an outboard brake caliper assembly or half which are secured together by fasteners, typically bolts. The inboard caliper assembly and the outboard caliper assembly are generally similar to one another and have a piston bore or bores which are in line with one another when the caliper is assembled. Also, it is know to form a one piece opposed piston caliper from aluminum. Unfortunately, it is expensive to machine the one piece aluminum opposed piston caliper because of the special "right angle" tooling that is needed and the speed at which the tooling can be operated.

### SUMMARY OF THE INVENTION

This invention relates to an improved structure for an opposed piston disc brake caliper adapted for use with a disc brake assembly and method for producing the same. The opposed piston disc brake caliper includes a caliper of a one piece construction including an inboard leg and an outboard leg connected together by a bridge portion. The inboard leg has at least one piston bore formed therein, the outboard leg has at least one piston bore formed therein, the inboard leg has at least one generally axially extending opening formed therein which is coaxially aligned with the outboard leg piston bore, and the outboard leg has at least one generally axially extending opening formed therein which is coaxially aligned with the inboard leg piston bore. The method for producing an opposed piston caliper comprises the steps of: a) providing a cast opposed piston caliper of a one piece construction having an inboard leg and an outboard leg connected together by a bridge portion, the inboard leg having at least one as cast rough formed piston bore formed therein, the outboard leg having at least one as cast rough formed piston bore formed therein, the inboard leg having at least one as cast generally axially extending opening formed therein, said outboard leg having at least one as cast generally axially extending opening formed therein, wherein the piston bores are staggered with respect to each other and wherein the generally axially extending openings are staggered with respect to each other and coaxially aligned with a respective piston bore whereby the openings define generally axially extending machine tool access openings; b) providing one or more axial machining tools; c) inserting the one or more axial machining tools through the generally axially extending access openings; and d) operating the one or more axial machining tools to thereby machine and finish the piston bores.

Other advantages of this invention will become apparent to those skilled in the art from the following detailed description of the invention, when read in light of the accompanying drawings.

### BRIEF DESCRIPTION OF THE DRAWINGS

- Fig. 1: is a perspective view of a first embodiment of a disc brake caliper constructed in accordance with the present invention.
- Fig. 2: is another view of the first embodiment of the disc brake caliper illustrated in Fig. 1.
- Fig. 3: is a perspective view of a second embodiment of a disc brake caliper constructed in accordance with the present invention.
- Fig. 4: is another view of the second embodiment of the disc brake caliper illustrated in Fig. 5.

- Fig. 5: is a perspective view of a third embodiment of a disc brake caliper constructed in accordance with the present invention.
- Fig. 6: is another view of the third embodiment of the disc brake caliper illustrated in Fig. 5.
- Fig. 7: is a perspective view of a fourth embodiment of a disc brake caliper constructed in accordance with the present invention.
- Figs. 8A and 8B: are schematic diagrams of a fifth embodiment of a disc brake caliper constructed in accordance with the present invention.
- Figs. 9A and 9B: are schematic diagrams of a sixth embodiment of a disc brake caliper constructed in accordance with the present invention.
- Figs. 10A and 10B: are schematic diagrams of a seventh embodiment of a disc brake caliper constructed in accordance with the present invention.
- Figs. 11A and 11B: are schematic diagrams of a eighth embodiment of a disc brake caliper constructed in accordance with the present invention.

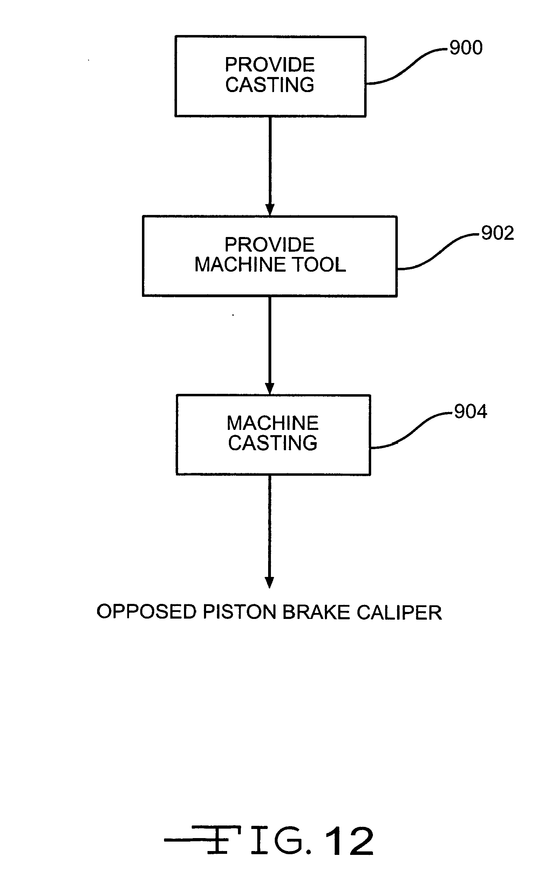

- Fig. 12: is a block diagram illustrating a sequence of steps for producing the opposed piston disc brake caliper in accordance with the present invention.
- Fig. 13: is a view of a portion of a prior art opposed piston caliper type of disc brake assembly.

### DETAILED DESCRIPTION OF THE INVENTION

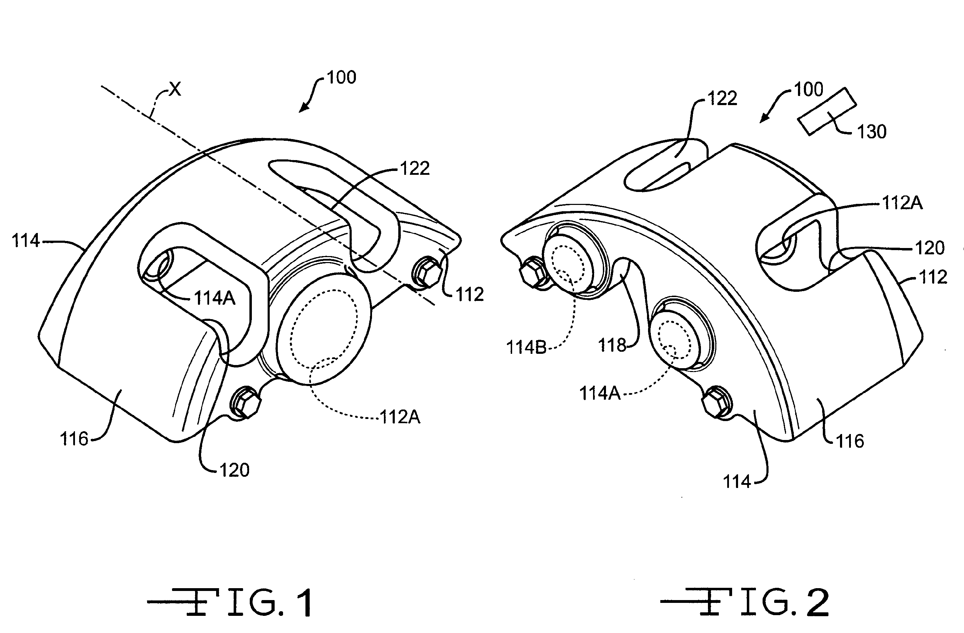

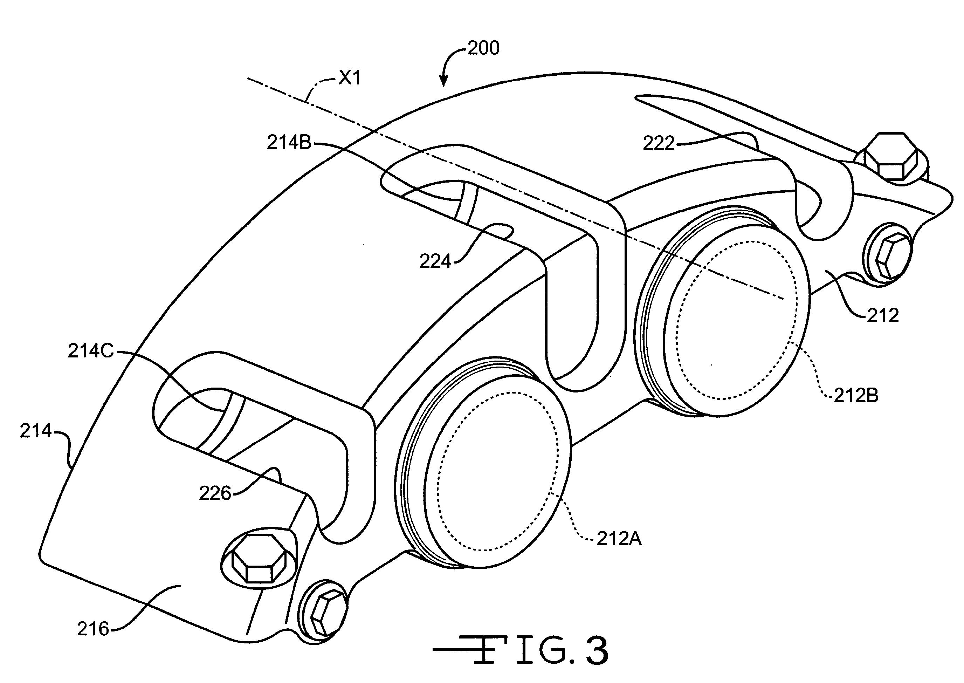

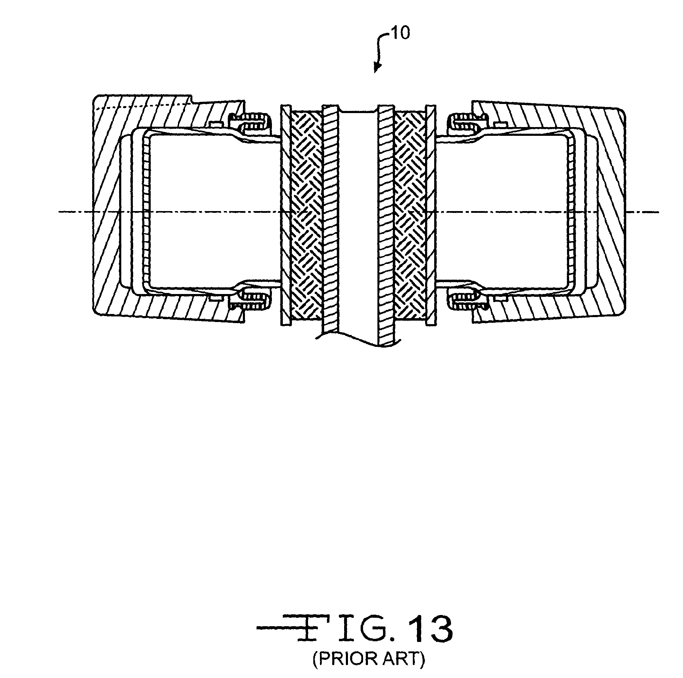

Referring now to the drawings, there is illustrated in Figs. 1 and 2 a first embodiment of an opposed piston disc brake caliper, indicated generally at 100, in accordance with the present invention. The opposed piston disc brake caliper 100 can be used in connection with a suitable disc brake assembly (not shown), the general structure and operation of the disc brake assembly is conventional in the art. While the caliper 100 is preferably used in a "fixed" type of disc brake assembly, such as that shown in U.S. Patent No. 5,538,105 to Rike, the disclosure of this patent incorporated by reference in entirety herein, the caliper 100 can be used in a "sliding" caliper type of disc brake assembly or any other suitable types of brake assemblies if so desired. For example, the opposed piston disc brake caliper 100 can be used in connection with the brake assemblies shown in U.S. Patent No. 6,386,335 to DiPonio, U.S. Patent No. 6,378,665 to McCormick et al., U.S. Patent No. 5,535,856 to McCormick et al., U.S. Patent No. 5,549,181 to Evans or U.S. Patent No. 5,180,037 to Evans, the disclosures of each of these patents incorporated by reference in entirety herein. Also, a portion of a typical prior art opposed piston disc brake assembly is indicated generally at 10 in prior art Fig. 13. Thus, only those portions of the opposed piston disc brake caliper 100 of this invention which are necessary for a full understanding of the invention will be explained and illustrated.

The illustrated opposed piston disc brake caliper 100 is an opposed three piston caliper of a one piece or "monoblock" construction formed from cast iron, grey iron, aluminum or other castable materials or alloys thereof and/or other suitable injectable materials, such as for example, injectable aluminum.

The caliper 100 defines an axis X and includes an inboard leg 112, and outboard leg 114 and a bridge 116 interconnecting the inboard leg 112 and the outboard leg 114 together. The inboard leg 112 includes a piston bore 112A provided therein and the outboard leg 114 includes a pair of piston bores 114A and 114B provided therein. Preferably, the piston bores 112A, 114A and 114B are sized or selected so as to apply a generally equal brake force to the associated brake shoes when the brake assembly is actuated. To accomplish, the sum of the total area of the inboard piston(s) must be generally equal to the sum of the total area of the outboard piston(s). For example, if the inboard piston bore 112A is approximately 60 mm then the outboard piston bores 114A and 114B are each approximately 43 mm; however, the piston bores 112A, 114A and 114B can also be sized so as to apply unequal forces to the associated brake shoes if so desired. Preferably, the increased number of the smaller piston bore(s) are provided on the outboard side of the caliper so as not to interfere with other brake components, such as for example the rotor hat of the associated brake rotor of the disc brake assembly. Alternatively, the inboard side of the caliper could include the increased number of the smaller piston bores if so desired.

The caliper 100 further includes a first "access machining" opening 118, a second access machining opening 120 and a third access machining opening 122 formed therein. The first opening 118 extends in a generally axial direction along the axis X and is formed in a portion of the outboard leg 114, the second opening 120 and the third opening 122 also extend in a generally axial direction and in parallel relationship with respect to the axis X are formed in a portion of the inboard leg 112 and a portion of the bridge 116. As will be discussed below, the openings 118, 120 and 122 are arranged or staggered in such a manner to allow the respective piston bores 112A, 114A and 114B to be machined by one or more suitable axial machining tools (one of such tools schematically illustrated in Fig. 2 by reference character 130), which is inserted axially through the respective openings 118, 120 and 122 so as to finish machine the bores. The machining of the piston bores 112A, 114A and 114B can occur in any desired order, such as for example, one at time, two at one time and one separately, or all three at the same time.

The first opening 118 is formed of a predetermined size or shape and is formed in the caliper 100 during the casting thereof in a predetermined location or orientation so as to enable the suitable axial machining tool 130 to be inserted axially therethrough so as to finish machine and form the finished piston bore 112A of the caliper 100. Similarly, the second opening 120 and the third opening 122 are formed of a predetermined size or shape and are formed in the caliper 100 during the casting thereof in a predetermined location or orientation so as to enable the suitable axial machining tool 130 to be inserted axially therethrough so as to finish machine and form the finished piston bores 114A and 114B, respectively, of the caliper 100. In the illustrated embodiment, the openings 118, 120 and 122 have identical generally circular shapes; however, the shape of one or more of the openings 118, 120 and 122 can be of any desired geometric shape and/or the shape of one or more of the openings 118, 120 and 122 can be different from shape of the others. Alternatively, the construction of the caliper 100 can be other than illustrated and described if so desired. For example, the number and/or the location of one or more of the piston bores 112A, 114A and 114B can be other than illustrated and described if so desired. Also, the shape, location and/or the configuration of one or more of the openings 118, 120 and 122 can be other than illustrated and described if so desired. The openings 118, 120 and 122 are sized so as to accommodate at least the size of the desired machining tool; however, the openings 118, 120 and 122 can also be sized not only to accommodate the size of the machining tool but also can be increased or optimized to further reduce the weight of the caliper 100 is so desired.

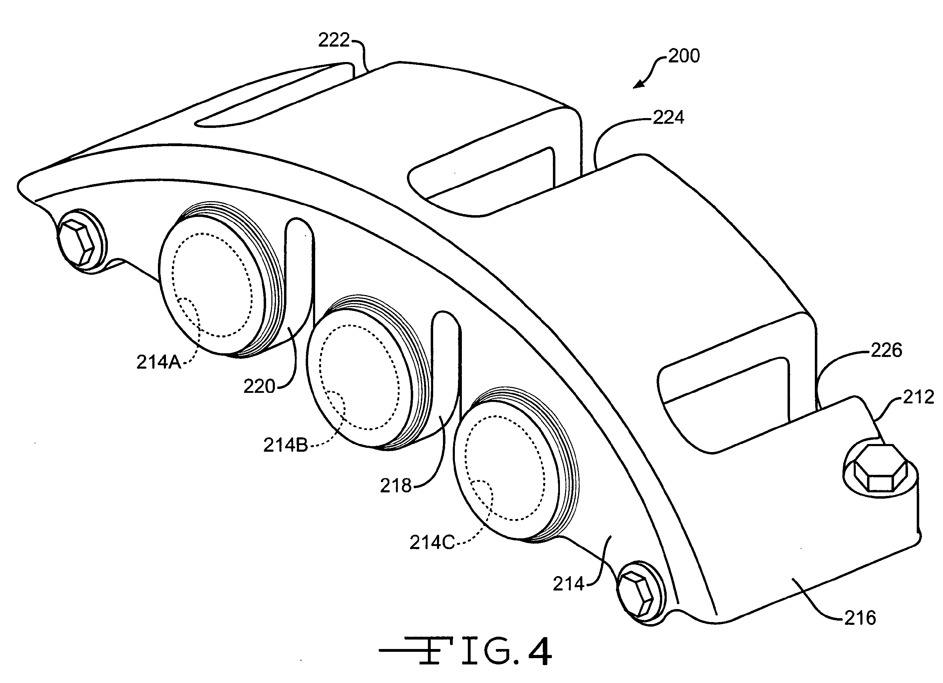

Referring now to Figs. 3 and 4 there is illustrated a second embodiment of a disc brake caliper, indicated generally at 200, in accordance with the present invention. In this embodiment, the caliper 200 defines an axis X1 and includes two piston bores 212A and 212B provided on an inboard leg 212 and three piston bores 214A, 214B and 214C provided on an outboard leg 214. The caliper also includes two generally axially extending openings 218 and 220 formed on a portion of the outboard leg 214 and three generally axially extending openings 222, 224 and 226 formed on portions of the inboard leg 212 and a bridge 216, and. As will be discussed below, the openings 218, 220, 222, 224 and 226 are arranged or staggered in such a manner to allow the respective piston bores 212A, 212B, 214A, 214B and 214C to be machined by a suitable axial machining tool which is inserted axial through the respective openings 218, 220, 222, 224 and 226 so as to finish machine the bores. The machining of the piston bores can occur in any desired order, such as for example, one bore at time, the two inboard bores followed by the three outboard bores, or all five bores at the same time. Also, in the embodiment illustrated in Figs. 3 and 4, the caliper 200 includes radial mounting bolts 230A and 230B for mounting the caliper 200 to the associated component of the vehicle; the caliper 10 illustrated in the embodiment of Figs. 1 and 2 is mounted using axial mounting bolts (not shown) in a conventional manner.

Preferably, the piston bores 212A, 212B, 214A, 214B and 14C are sized or selected so as to apply a generally equal brake force to the associated brake shoes when the brake assembly is actuated. To accomplish, the sum of the total area of the inboard piston(s) must be generally equal to the sum of the total area of the outboard piston(s). For example, if the inboard piston bores 212A and 212B are each approximately 60 mm then the outboard piston bores 214A, 214B and 214C are each approximately 49 mm; however, the bores 212A, 212B, 214A, 214B and 214C can also be sized so as to apply unequal forces to the associated brake shoes if so desired. Alternatively, the construction of the caliper 200 can be other than illustrated and described if so desired. For example, the number and/or the location of one or more of the piston bores 212A, 212B, 214A, 214B and 214C can be other than illustrated and described if so desired. Also, the shape, location and/or the configuration of one or more of the openings 218, 220, 222 224 and 226 can be other than illustrated and described if so desired. The openings 218, 220, 222, 224 and 226 are sized so as to accommodate at least the size of the desired machining tool; however, the openings 218, 220, 222, 224 and 226 can also be sized not only to accommodate the size of the machining tool but also can be increased or optimized to further reduce the weight of the caliper 200 is so desired.

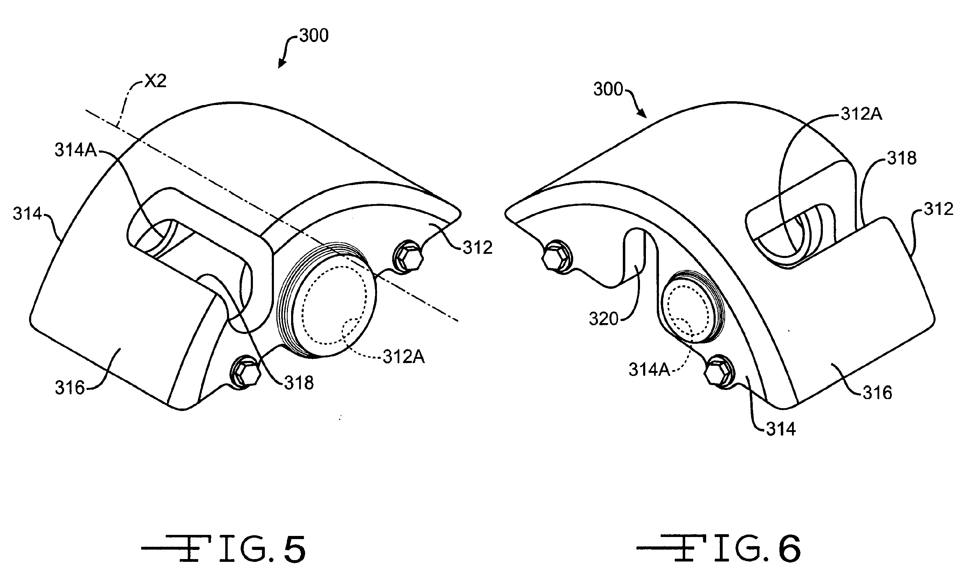

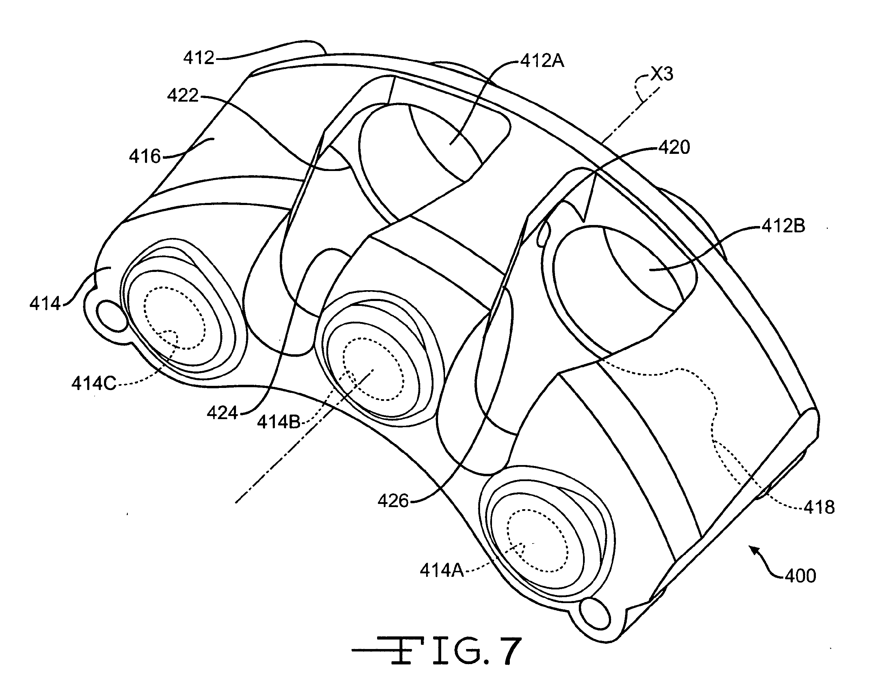

Referring now to Figs. 5 and 6 there is illustrated a third embodiment of a disc brake caliper, indicated generally at 300, in accordance with the present invention. In this embodiment, the caliper 300 defines an axis X2 includes a piston bore 312A provided in an inboard leg 312 and a piston bore 314A provided in an outboard leg 314. The caliper 300 also includes a generally axially extending opening 318 formed in a portion of the inboard leg 312 and a bridge 316, and a generally axially extending opening 320 formed in a portion of the outboard leg 314. As will be discussed below, the axial extending openings 318 and 320 are arranged or staggered in such a manner to allow the respective piston bores 314A and 312A to be machined by a suitable axial machining tool which is inserted axial through the respective openings 318 and 320 so as to finish machine the bores. The machining of the piston bores 312A and 314 can occur in any desired order separately or can occur at the same time.

Alternatively, the construction of the caliper 300 can be other than illustrated and described if so desired. For example, the number and/or the location of one or more of the piston bores 312A and 314A can be other than illustrated and described if so desired. Also, the shape, location and/or the configuration of one or both of the openings 318 and 320 can be other than illustrated and described if so desired. The openings 318 and 320 are sized so as to accommodate at least the size of the desired machining tool; however, the openings 318 and 320 can also be sized not only to accommodate the size of the machining tool but also can be increased or optimized to further reduce the weight of the caliper 300 is so desired.

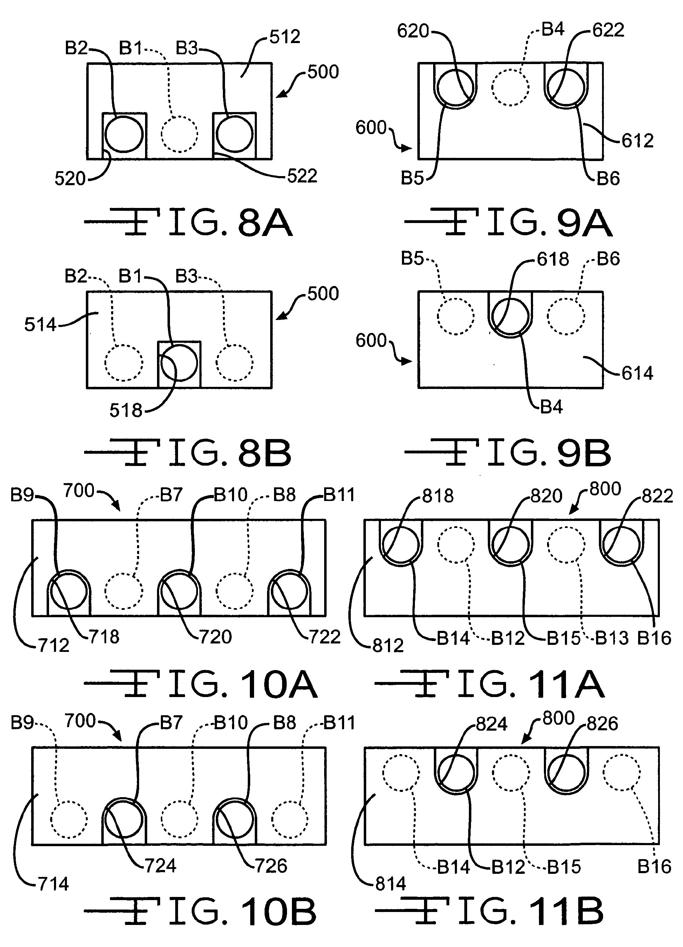

Referring now to Fig. 9 there is illustrated a fourth embodiment of a disc brake caliper, indicated generally at 400, in accordance with the present invention. In this embodiment, the caliper 400 defines an axis X4 and includes two piston bores 412A and 412B provided on an inboard leg 412 and three piston bores 414A, 414B and 414C provided on an outboard leg 414. The caliper further includes three generally axially extending openings 418, 420 and 422 formed in portions of the inboard leg 412, and two generally axially extending openings 424 and 426 formed in portions of the outboard leg 414 and a bridge 416. As will be discussed below, the axial extending openings 418, 420, 422, 424 and 426 are arranged or staggered in such a manner to allow the respective piston bores 414A, 414B, 414C, 412A and 412B to be machined by a suitable axial machining tool which is inserted axially through the respective openings 418, 420, 422, 424 and 426 so as to finish machine the bores. The machining of the piston bores can occur in any desired order, such as for example, one bore at time, the two inboard bores followed by the three outboard bores, or all five bores at the same time.

The difference between the embodiment shown in Fig. 7 and the embodiment shown in Figs. 3 and 4 is that the associated openings are inverted between these two illustrated embodiments. Specifically, in the embodiment shown in Figs. 3 and 4, the openings 222, 224 and 226 for the outboard piston bores 214A, 214B and 214C, respectively, are formed downwardly into the caliper (when viewing Figs. 3 and 4), whereas in Fig. 7 the openings 418, 420 and 422 for the outboard piston bores 414C, 414B and 414A, respectively, are formed upwardly into the caliper 400 (when viewing Fig. 7). Similarly, in Figs. 3 and 4 the openings 218 and 220 for the inboard piston bores 212A and 212B, respectively, are formed upwardly into the caliper, whereas in Fig. 7 the openings 424 and 426 for the inboard piston bores 412A and 412B, respectively, are formed downwardly into the caliper. Alternatively, the construction of the caliper 400 can be other than illustrated and described if so desired.

Referring now to Figs. 8A and 8B, there is schematically illustrated a fifth embodiment of a caliper 500 in accordance with this invention. As shown therein, in this embodiment an inboard leg 512 of the caliper 500 includes two upwardly extending generally axially extending openings 520 and 522 formed therein and an outboard leg 514 of the caliper 500 includes a single upwardly generally axially extending opening 518 formed therein. The opening 518 is used to formed a single inboard piston bore B1 in the inboard leg 512 of the caliper 500, and the openings 520 and 522 are used to form a pair outboard piston bores B2 and B3 in the outboard leg 514 of the caliper 500.

Referring now to Figs. 9A and 9B, there is schematically illustrated a sixth embodiment of a caliper 600 in accordance with this invention. As shown therein, in this embodiment an inboard leg 612 includes two upwardly generally axially extending openings 620 and 622 and an outboard leg 614 includes a single upwardly generally axially extending opening 618. The opening 618 is used to formed a single inboard piston bore B4 in the inboard leg 612 of the caliper 600, and the openings 620 and 622 are used to form a pair outboard piston bores B5 and B6 in the outboard leg 614 of the caliper 600.

Referring now to Figs. 10A and 10B, there is schematically illustrated an seventh embodiment of a caliper 700 in accordance with this invention. As shown therein, in this embodiment an inboard leg 712 includes three upwardly generally axially extending openings 718, 720 and 722 and an outboard leg 714 includes two upwardly generally axially extending openings 724 and 726. The openings 724 and 726 are used to formed a pair of inboard piston bore B7 and B8 in the inboard leg 712 of the caliper 700, and the openings 718, 720 and 722 are used to form three outboard piston bores B9, B10 and B11 in the outboard leg 714 of the caliper 700.

Referring now to Figs. 11A and 11B, there is schematically illustrated an eighth embodiment of a caliper 800 in accordance with this invention. As shown therein, in this embodiment an inboard leg 812 includes three upwardly generally axially extending openings 818, 820 and 822 and an outboard leg 814 includes two upwardly generally axially extending openings 824 and 826. The openings 824 and 826 are used to formed a pair of inboard piston bore B12 and B13 in the inboard leg 812 of the caliper 800, and the openings 818, 820 and 822 are used to form three outboard piston bores B14, B15 and B16 in the outboard leg 714 of the caliper 700.

Referring now to Fig. 13, there is illustrated a block diagram illustrating a sequence of steps for producing the opposed piston disc brake caliper in accordance with the present invention. In step 900, there is provided a cast, integral, one-piece opposed piston caliper having an inboard leg and an outboard leg connected together by a bridge portion. The inboard leg has at least one as cast rough formed piston bore formed therein, the outboard leg has at least one as cast rough formed piston bore formed therein, the inboard leg has at least one as cast generally axially extending opening formed therein, and the outboard leg has at least one as cast generally axially opening formed therein. The piston bores are staggered with respect to each other and the openings are staggered with respect to each other and coaxially aligned with a respective piston bore whereby the openings define machine tool access openings. Next, in step 902, there is provided one or more suitable axial machining tools. In step 904, the one or more axial machining tools are inserted through the machine tool access openings. Following this, in step 904, the one or more axial machining tools are operated to thereby machine and finish the piston bores to thereby produce the opposed piston brake caliper of the present invention.

One advantage of the present invention it enables an opposed piston disc brake caliper to be formed as one piece from cast iron. This is due to the fact that the associated piston bores are arranged in such a manner so as to be staggered or alternated and that axial access machining openings are provided in the caliper which allows the piston bores to be machined by a suitable machining tool. As a result, a known or conventional boring bar that needs to reach the piston bore to machine it can drop right into the opening.

It will be appreciated that while the present invention has been described and illustrated in conjunction with the particular vehicle disc brake assembly disclosed herein, the invention may be used in conjunction with other disc brake assemblies. For example, the invention may be used in conjunction with opposed piston types of disc brake assemblies having one or more than two opposed pistons; and/or in conjunction with a pin shoe slider or rail shoe slider type of disc brake assembly; and/or in conjunction with an opposed piston sliding caliper type of disc brake assembly; and/or in conjunction with a pin abutment type of disc brake assembly. In accordance with the provisions of the patent statutes, the principle and mode of operation of this invention have been described and illustrated in its preferred embodiments. However, it must be understood that the invention may be practiced otherwise than as specifically explained and illustrated without departing from the scope or spirit of the attached claims.

## Claims

1. An opposed piston brake caliper adapted for use in a vehicle disc brake assembly comprising:
an integral one-piece opposed piston brake caliper defining an axis and including an inboard leg and an outboard leg connected together by a bridge portion, said inboard leg having at least one piston bore formed therein, said outboard leg having at least one piston bore formed therein, said inboard leg having at least one generally axially extending opening formed therein which is coaxially aligned with said outboard leg piston bore, and said outboard leg having at least one generally axially extending opening formed therein which is coaxially aligned with said inboard leg piston bore.

2. The opposed piston brake caliper of Claim 1 wherein said outboard leg has two piston bores formed therein and one generally axially extending opening formed therein and said inboard leg has one piston bore formed therein and two generally axially extending openings formed therein.

3. The opposed piston brake caliper of Claim 1 wherein said outboard leg has three piston bores formed therein and two generally axially extending openings formed therein and said inboard leg has two piston bores formed therein and three generally axially extending openings formed therein.

4. The opposed piston brake caliper of Claim 1 wherein the number of piston bores formed in said outboard leg is at least one more than the number of piston bores formed in said inboard leg and the number of generally axially extending openings formed in said inboard leg is at least one more than the number of generally axially extending openings formed in said outboard leg.

5. The opposed piston brake caliper of Claim 4 wherein a sum of the total area of the inboard piston bores is generally equal to the sum of the total area of the outboard piston bores.

6. The opposed piston brake caliper of Claim 4 wherein the inboard piston bores are larger than the outboard piston bores.

7. The opposed piston brake caliper of Claim 1 wherein said generally axially extending openings in said inboard leg and said outboard leg extend in the same direction.

8. The opposed piston brake caliper of Claim 1 wherein said generally axially extending openings in said inboard leg and said outboard leg extend in the opposite direction.

9. The opposed piston brake caliper of Claim 1 wherein said caliper is adapted for use in one of a fixed type of disc brake assembly and a sliding type of disc brake assembly and wherein said caliper is formed from one of cast iron, grey iron, aluminum or other castable materials or alloys thereof and/or from other suitable injectable materials.

10. An opposed piston brake caliper adapted for use in a vehicle disc brake assembly comprising:
an integral one-piece opposed piston brake caliper including an inboard leg and an outboard leg connected together by a bridge portion, said inboard leg having at least one piston bore formed therein, said outboard leg having at least one piston bore formed therein, said inboard leg having at least one generally axially extending opening formed therein, said outboard leg having at least one generally axially extending opening formed therein, wherein said piston bores are staggered with respect to each other and wherein said generally axially extending openings are staggered with respect to each other and coaxially aligned with a respective piston bore whereby said openings define generally axially extending machine tool access openings which allow the piston bores to be machined by a suitable axial machining tool inserted into the associated openings.

11. The opposed piston brake caliper of Claim 10 wherein said outboard leg has two piston bores formed therein and one opening formed therein and said inboard leg has one piston bore formed therein and two openings formed therein.

12. The opposed piston brake caliper of Claim 10 wherein said outboard leg has three piston bores formed therein and two generally axially extending openings formed therein and said inboard leg has two piston bores formed therein and three generally axially extending openings formed therein.

13. The opposed piston brake caliper of Claim 10 wherein the number of piston bores formed in said outboard leg is at least one more than the number of piston bores formed in said inboard leg and the number of generally axially extending openings formed in said inboard leg is at least one more than the number of generally axially extending openings formed in said outboard leg.

14. The opposed piston brake caliper of Claim 13 wherein a sum of the total area of the inboard piston bores is generally equal to the sum of the total area of the outboard piston bores.

15. The opposed piston brake caliper of Claim 13 wherein the inboard piston bores are larger than the outboard piston bores.

16. The opposed piston brake caliper of Claim 10 wherein said generally axially extending openings in said inboard leg and said outboard leg extend in the same direction.

17. The opposed piston brake caliper of Claim 10 wherein said generally axially extending openings in said inboard leg and said outboard leg extend in the opposite direction.

18. The opposed piston brake caliper of Claim 10 wherein said caliper s adapted for use in one of a fixed type of disc brake assembly and a sliding type of disc brake assembly and wherein said caliper is formed from one of cast iron, grey iron, aluminum or other castable materials or alloys thereof and/or from other suitable injectable materials.

19. An opposed piston caliper type of disc brake assembly for a vehicle comprising:
a brake rotor;
a pair of brake shoes carried by said disc brake assembly and adapted to engage said brake rotor;
means for selectively moving said brake pads toward and away from one another; and
an integral one-piece opposed piston brake caliper defining an axis and including an inboard leg and an outboard leg connected together by a bridge portion, said inboard leg having at least one piston bore formed therein, said outboard leg having at least one piston bore formed therein, said inboard leg having at least one generally axially extending opening formed therein which is coaxially aligned with said outboard leg piston bore, and said outboard leg having at least one generally axially extending opening formed therein which is coaxially aligned with said inboard leg piston bore.

20. A method for producing an opposed piston brake caliper comprising the steps of:
a) providing a cast, integral, one-piece opposed piston caliper having an inboard leg and an outboard leg connected together by a bridge portion, the inboard leg having at least one as cast rough formed piston bore formed therein, the outboard leg having at least one as cast rough formed piston bore formed therein, the inboard leg having at least one as cast generally axially extending opening formed therein, the outboard leg having at least one as cast generally axially extending opening formed therein, wherein the piston bores are staggered with respect to each other and wherein the generally axially extending openings are staggered with respect to each other and coaxially aligned with a respective piston bore whereby the openings define generally axially extending machine tool access openings;
b) providing one or more axial machining tools;
c) inserting the one or more axial machining tools through the generally axially extending access openings; and
d) operating the one or more axial machining tools to thereby machine and finish the piston bores.

21. The method for producing the opposed piston brake caliper of Claim 20 wherein the caliper provided in step (a) has two as cast rough formed piston bores and one generally axially extending opening formed in the outboard leg and one as cast rough formed piston bore and two generally axially extending openings formed in the inboard leg.

22. The method for producing the opposed piston brake caliper of Claim 20 wherein the caliper provided in step (a) has three as cast rough formed piston bores and two generally axially extending openings formed in the outboard leg and two as cast rough formed piston bores and three generally axially extending openings formed in the inboard leg.

23. The method for producing the opposed piston brake caliper of Claim 20 wherein in step (a) the number of as cast rough formed piston bores formed in the outboard leg is at least one more than the number of as cast rough formed piston bores formed in the inboard leg and the number of generally axially extending openings formed in the inboard leg is at least one more than the number of generally axially extending openings formed in the outboard leg.

24. The method for producing the opposed piston brake caliper of Claim 23 wherein in step (a) a sum of the total area of the as cast rough formed piston bores formed inboard leg is generally equal to the sum of the total area of the as cast rough formed piston bores formed in the outboard leg.

25. The method for producing the opposed piston brake caliper of Claim 23 wherein in step (a) the as cast rough formed piston bores formed in the inboard leg are larger than the as cast rough formed piston bores formed in the outboard leg.

26. The method for producing the opposed piston brake caliper of Claim 20 wherein in step (a) the as cast generally axially extending openings formed in the inboard leg and the as cast generally axially extending openings formed in the outboard leg extend in the same direction.

27. The method for producing the opposed piston brake caliper of Claim 20 wherein in step (a) the as cast generally axially extending openings formed in the inboard leg and the as cast generally axially extending openings formed in the outboard leg extend in the opposite direction.

28. The method for producing the opposed piston brake caliper of Claim 20 wherein the caliper provided in step (a) is adapted for use in one of a fixed type of disc brake assembly and a sliding type of disc brake assembly and wherein the caliper provided in step (a) is formed from one of cast iron, grey iron, aluminum or other castable materials or alloys thereof and/or from other suitable injectable materials.
